# EUROPEAN PATENT SPECIFICATION

(11) **EP 3 443 829 B1**
(45) Date of publication and mention of the grant of the patent: **15.04.2020**
(21) Application number: 18188646.6
(22) Date of filing: 13.08.2018
(51) Int. Cl.: A01C 1/02, A01G 31/06

(54) **SPROUTER**
SCHRANK ZUR SAMENKEIMUNG
CABINET POUR LA GERMINATION DES GRAINES

(30) Priority: 18.08.2017 IT 201700094360
(43) Date of publication of application: 20.02.2019
(73) Proprietor: Fumi, Fabio, 06132 Perugia (PG) (IT)
(72) Inventor: Fumi, Fabio, 06132 Perugia (PG) (IT)
(74) Representative: Ercolani, Simone Pietro

(56) References cited:
- WO-A1-85/00269
- BE-A- 855 876
- CN-Y- 201 001 303
- DE-A1-102010 031 082
- GB-A- 2 541 687
- US-A- 3 260 304
- US-A- 6 067 750

## Description

The present invention concerns a sprouter.

According to the known art, sprouters are used to promote the growth of sprouts, including those used for food and grown indoors.

It is known that such devices comprise a box-shaped container and one or more transverse sprouting diaphragms, or trays, positioned inside the box-shaped container at different heights. Such box-shaped container in turn comprises a front opening for inserting the aforesaid diaphragms and a door that can be combined with the opening for the closing and opening of the box-shaped container.

For example, the Chinese Utility Model CN204616313U, in the name of HUBEI CERES TECHNOLOGY CO LTD, describes a sprouter comprising a box-shaped container provided with a rigid door and a plurality of trays. The sprouter described in the Chinese Patent also comprises a lower reservoir and a pump to make water, or the irrigation liquid of the sprouts, circulate inside the box-shaped container. The water is sprayed above by means of special nozzles. Finally, the container is provided with an opening for the internal ventilation of the box-shaped container.

The Chinese document CN20440882, in the name of CHONGQING KAIRUI AGRICULTURAL DEV CO LTD et alii, describes a solution similar to the one described in the Patent CN204616313U described above. In particular, this document describes a sprouter comprising a first fan adapted to make air circulate inside the box-shaped container and a second fan adapted to introduce fresh air inside the box-shaped container and to release consumed air outside of it after the same has been recirculated for a certain period inside the box-shaped container, thanks to the internal fan.

The document CN104365221, in the name of GU MINGTAO describes a sprouter rather similar to the one described in the document CN20440882. In the CN104365221 solution, the sprouter further comprises a series of sensors, such as humidity and temperature sensors, adapted to vary the climatic conditions of the sprouting chamber. Further sprouter are disclosed in CN 201 001 303 Y and US 3260304 A.

However, the aforesaid solutions are not without drawbacks. In particular, the aforesaid solutions always comprise a door that completely covers the opening for the access to the diaphragms on which the seeds used for the growth of the sprouts are deposited and thus do not ensure an adequate passage of air between the outside and inside of the sprouter. This can result in the immediate generation of unpleasant smells in the room or place in which the sprouter is positioned and, shortly after, in the eventual molding of the sprouts and in a high risk of condense forming inside with the consequent presence of bacterial loads. Instead, other solutions provide a passage of air between the inside and outside of the sprouter, with a closed door, however obtained through the presence of mechanical and electric elements such as, for example, one or more fans that considerably complicate the sprouter both in terms of structure and assembly. Moreover, a further disadvantage of the solutions of the known art is that the user cannot effectively modify the volume of the box-shaped container in which to allow or prevent the exchange of air inside it. Therefore, an object of the present invention is to achieve a sprouter that excludes a priori the condition prerequisite for the formation of molds and condensations inside the sprouter, with a consequent presence of bacterial loads.

A further object of the present invention is to achieve a simple sprouter from both a structural and constructive point of view.

Finally, an object of the present invention is to implement an easy-to-use sprouter capable of ensuring greater flexibility of use.

These and other objects are achieved by a sprouter according to claim 1.

This solution therefore allows to achieve the objects mentioned. The use of a curtain makes it possible to increase or decrease the passage section of air inside the box-shaped container in order to allow or prevent the passage of air inside the box-shaped container based on the number of shelves actually used by the user. Therefore, in practice, the curtain allows to cover at least partially, or completely, said at least one opening, or between two consecutive diaphragms, or between a diaphragm and the upper, or lower, edge delimiting the opening of the box-shaped container.

According to a first embodiment of the invention, this curtain can be wound around a winding axis. Moreover, the sprouter comprises winding means to wind said curtain; these winding means comprise at least one rotation shaft around which said at least one curtain can be wound, wherein said rotation shaft has a longitudinal axis coinciding with said winding axis.

According to a further embodiment of the invention, said curtain is of the pleated type, or foldable/stretchable. In this case, the sprouter comprises means to fold/stretch said pleated curtain, wherein said means comprise at least one flat-base stop rod on which said pleated curtain completely folds.

According to a further embodiment, said at least one opening is defined by a least one upper edge and at least one lower edge; said at least one rotation shaft, or said stop rod, is therefore arranged at either said upper edge or said lower edge.

Moreover, and always according to the invention, said curtain is sized so that its weight is such as to maintain it in a stable position in a plurality of different positions as it gradually lengthens or shortens.

Both according to the first and second embodiment of the invention, the sprouter comprises at least one linear guide to guide the lengthening/shortening of said curtain; such at least one linear guide is constrained to said box-shaped container in a substantially parallel direction to that of the lengthening/shortening of the curtain.

Moreover, according to a particular embodiment of the invention, said rotation shaft, or said at least one stop rod, can slide along said at least one guide and can be reversibly stopped in a plurality of positions.

Moreover, the holes of said plurality of holes in the curtain are preferably less than 2 mm in size and anyhow capable of ensuring a continuous passage of air inside and outside of the sprouter. It should be noted that the term hole refers to any opening of geometric, or circular, or rectangular shape that is anyhow less than 2 mm in diameter or length or width. In practice, this solution advantageously makes it possible to completely cover the opening of the box-shaped container and to both allow the exchange of air between the inside and outside of the container and to prevent insects, such as gnats, mosquitoes or other, from accessing the container and thus from compromising the hygiene of the sprouts growing. Therefore, in practice, thanks to the presence of such holes of such reduced size, it is also possible to only partially cover said at least one opening so as to only cover the access to the bored diaphragms on which the sprouts were planted and to anyhow allow the passage of air at said section of the covered opening. It should be noted that a simple cotton curtain, therefore breathable, would not be suitable for solving the aforesaid technical problems since it would not allow the passage of air between the inside and outside of the sprouter. Moreover, a curtain made of cotton or similar would be subject to molds and/or to retain humidity inside the sprouter without being able to provide a suitable exchange of air between the inside and outside of the sprouter. Therefore, the holes must be greater than a certain size in order to ensure the aforesaid passage of air, preferably greater than 0.7 mm.

According to the invention, said box-shaped container comprises a plurality of modules combinable by stacking. Said plurality of combinable modules comprises a lower module provided with a lower base, an upper module provided with an upper covering element and one or more intermediate modules comprised between said upper module and said lower module. Each intermediate module is provided with a couple of transverse guides arranged on opposite sides in order to bear at least one diaphragm of said one or more diaphragms. This solution is supported by the presence of a door of the curtain type that can be stretched in length according to the final height of the box-shaped container, therefore according to the number of intermediate diaphragms selected by the user, who can therefore advantageously customize the use around the need.

According to a further embodiment, the sprouter comprises connecting means to connect said one or more modules of said plurality of modules by stacking them removably; said connecting means comprise at least one jutting portion and at least one corresponding recessed portion that can be shape coupled to said jutting portion, wherein each module of said plurality of modules comprises at least one jutting portion and/or at least one recessed portion so as to couple by staking to a module placed below and/or to a module arranged above.

According to the invention, the sprouter comprises irrigating means in turn comprising at least one vessel for containing the irrigation liquid, at least one pump and at least one channeling line to channel, by means of said at least one pump, said irrigation liquid towards said upper module.

Preferably, said upper module comprises a delivering plate to deliver the irrigation liquid. Such irrigating plate is provided with a plurality of irrigating nozzles and is arranged at a lower level than said upper cover.

According to the invention, said channeling line comprises a plurality of ducts. Each duct is constrained to the respective module of said plurality of combinable modules so that the ducts of two consecutive modules, at least when stacked, are sealingly combined to one another.

Finally, the sprouter comprises a box-shaped container and one or more bored transverse sprouting diaphragms positionable inside said box-shaped container at different heights, said box-shaped container further comprising at least one opening for inserting said one or more bored diaphragms and a plurality of modules combinable by stacking, said plurality of combinable modules comprising a lower module provided with a lower base, an upper module provided with an upper covering element, and one or more intermediate modules comprised between said upper module and said lower module, one or more modules of said plurality of modules being provided with a couple of transverse guides arranged on opposite sides in order to bear at least one diaphragm of said one or more diaphragms, said sprouter further comprising irrigating means comprising at least one vessel for containing the irrigation liquid, at least one pump and at least one channeling line to channel, by means of said at least one pump, said irrigation liquid to said upper module, characterized in that said channeling line comprises a plurality of ducts, each duct being constrained to the respective module of said plurality of stackable modules so that the ducts of two consecutive stackable modules, at least when stacked, are sealingly combinable to one another.

This solution therefore makes it possible to exploit the channeling ducts combined with the modules and to use them both for the passage of the irrigation liquid as position centering and locking elements for the stacking of the modules. Moreover, this solution further makes it possible to quickly assemble/disassemble the sprouter and/or to raise or lower its height according to the production needs required. Moreover, thanks to this solution and regardless of the number of modules used, it will always be possible to create a channeling line that brings the irrigation liquid from the lower container to the upper module in order to deliver it to the diaphragms without also having to assembly the channeling line, since it will already be assembled once the modules will be stacked correctly among one another.

These and other aspects of the present invention will be clearer to the field technician from the following description of a preferred embodiment of the present invention, provided by way of example and not limiting, with reference to the figures attached, wherein:
figures 1A, 1B and 1C show axonometric views of the sprouter according to a first embodiment of the invention, with a winding curtain arranged in three different positions;
figures 2A and 2B show two axonometric views of the sprouter according to a second embodiment, with a pleated curtain arranged in two different positions;
figure 3 shows a sectional longitudinal view of the sprouter both according to the first and second embodiment;
figure 4 shows a sectional longitudinal view of a sprouter according to a third embodiment of the invention;
figure 5A shows an axonometric view of the sprouter according to the embodiment shown in figure 4, but with one module less compared to the one shown in figure 4;
figures 5B and 5C respectively show a front and axonometric view of the sprouter in figure 5A with the curtain in two different positions;
figures 6A and 6B respectively show a view of the side of a module of the sprouter and a series of sides assembled to one another on several modules of the sprouter.

With particular reference to these figures, the number 1 was used to denote a sprouter according to the invention.

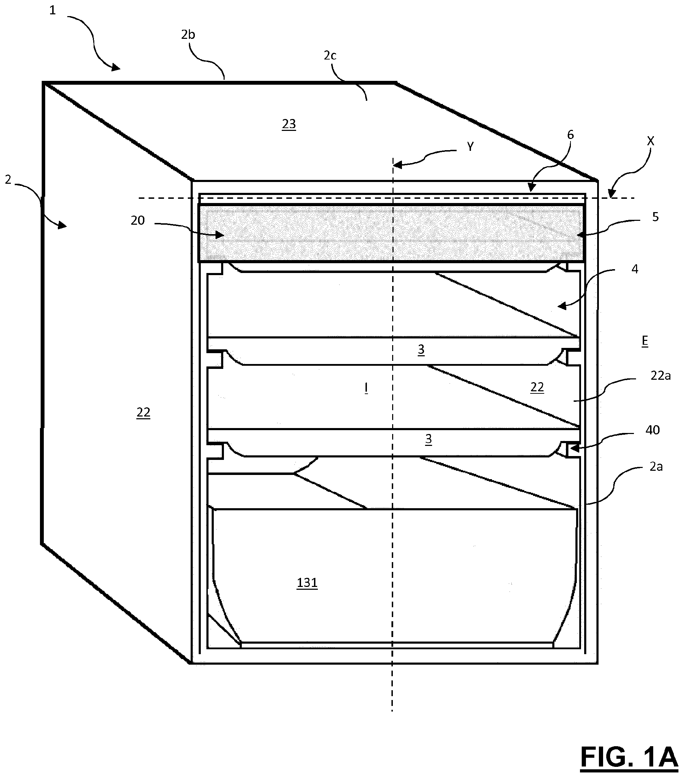

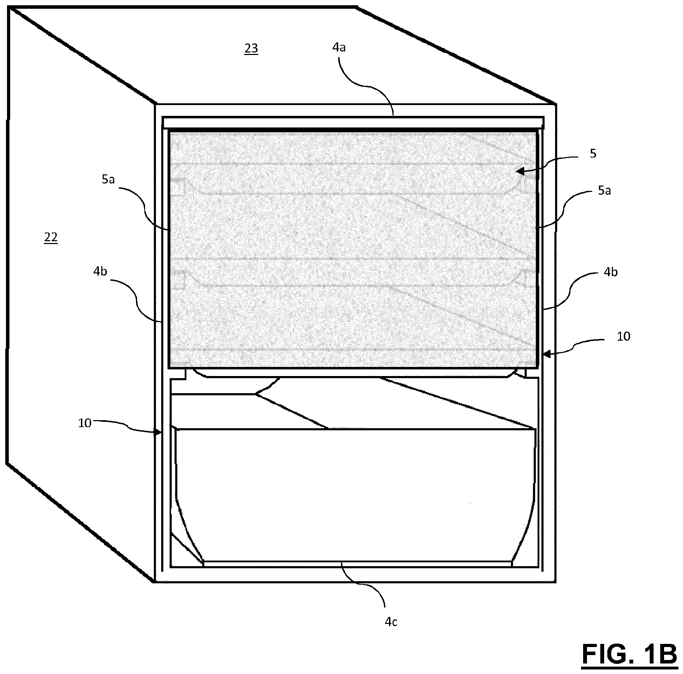

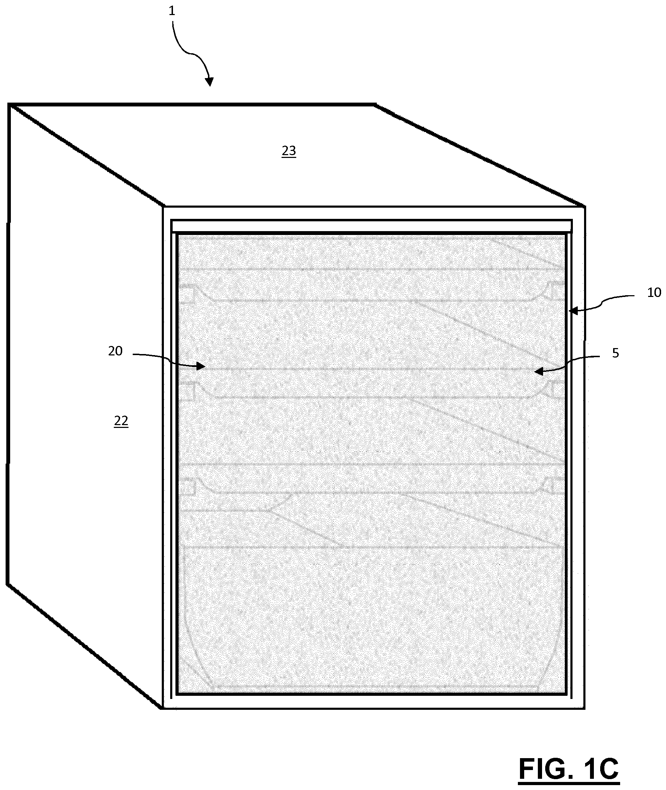

A first embodiment of the invention is shown in figures 1A, 1B and 1C. In these figures, the sprouter 1 comprises a box-shaped container 2 and three bored transverse sprouting diaphragms 3 positionable in the box-shaped container 2 at different heights. According to the known art, a certain quantity of seeds for the controlled growth of the sprouts is arranged on these bored diaphragms 3. Although in the attached drawings these bored diaphragms 3 are always shown in a quadrilateral, or rectangular, shape, a circular type of bored diaphragms 3 would anyhow be included in the protection scope of the present invention. These circular diaphragms 3 are advantageously used in combination with a box-shaped container 4 with quadrilateral cross-section, since on the four corners of the quadrilateral, when diaphragms are inserted, there are air passages that improve the circulation of the air between two overlapping contiguous diaphragms.

The box-shaped container 2 further comprises a front opening 4 and a door 5 combinable with the opening 4 arranged on the front side 2a of the box-shaped container 2. Advantageously, the door 5 comprises a curtain that can be wound around a winding axis X and which is constrained to slide along the container 2 so as to lengthen or shorten and to thus cover, at least partially, the front opening 4. The curtain 5 further comprises a plurality of holes 20 for the passage of air inside the box-shaped container 2. Figures 1A, 1B and 1C show three different positions in which the curtain 5 is once unwound, also to vary the section of the opening 4 for the passage of air between the inside I and outside E of the box-shaped container 2, and to thus prevent the new sprouts from molding, thanks to the fact that it promotes the exchange of air inside the box-shaped container 2.

Although the embodiment provides the presence of a single front opening 4, it should anyhow be noted that the presence of a further opening, on the back side 2b of the box-shaped container 2 for example, combined with a further door 5 of the curtain type, would anyhow be included in the protection scope of the present invention. This would moreover make it possible to considerably increase the exchange of air inside of the sprouter 1.

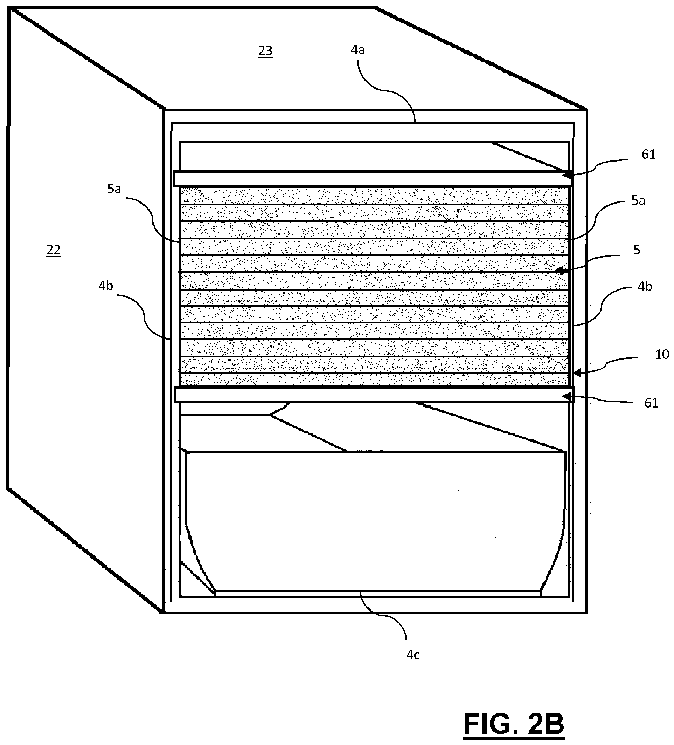

Moreover, the sprouter 1 comprises winding means for the curtain 5. These winding means comprise a rotation shaft 6 around which the curtain can be wound. This rotation shaft 6 has a longitudinal axis coinciding with the winding/unwinding axis X of the curtain 5. In particular, the front opening 4 is defined by an upper edge 4a, two side edges 4b and a lower edge 4c. The rotation shaft 6 is constrained to the front side 2a of the box-shaped container 2 and is, preferably, aligned to and at the upper edge 4a of the opening 4. This way, the curtain 5 is unwound starting from the upper edge 4a in direction of the lower one 4c and wound in direction of the upper edge 4a. It should be noted that, in figure 1A, the curtain 5 is positioned to cover the highest section of the opening 4 comprised between the diaphragm 3 that is at a higher height and the upper edge 4a that defines the opening 4, in figure 2B the curtain 5 is positioned to cover the section of the opening 4 comprised between the upper edge 4a and the diaphragm 3 arranged at a lower height, finally, in figure 1C the curtain 5 completely covers the opening 4.

According to the embodiment herein described, the winding curtain 5 is sized so that its weight is such as to maintain it in a stable position in a plurality of different positions as it gradually lengthens/shortens.

According to the embodiment described in figures 1A and 1C attached, the sprouter 1 comprises two linear guides 10 in order to guide the lengthening/shortening of the curtain 5 along the edges 5a. These two linear guides 10 are constrained integrally to the front side 2a of the box-shaped container 2, in a Y direction parallel to the lengthening/shortening direction of the curtain 5 and orthogonally to the one of said winding axis X. In particular, these two linear guides 10 are arranged along the respective side edge 4b of the opening 4 of the box-shaped container 4. Alternatively, in an embodiment not shown herein, the sprouter 1 comprises elastic return means for the winding curtain 5 to force the rotation shaft 6 to always rotate in the winding direction of the curtain and a plurality of pairs of engaging elements combined at various heights along the two side edges 4b of the opening 4 of the box-shaped container 2, which are couplable with two fastening elements arranged on the lower end of the curtain 5 at the diaphragms 3. This way, the curtain 5, alternatively to the embodiment herein described and shown, would be constrained to these engaging elements at different heights.

The winding means for the curtain 5 can further comprise, in an embodiment not shown herein, a cord to lengthen or shorten the curtain 5.

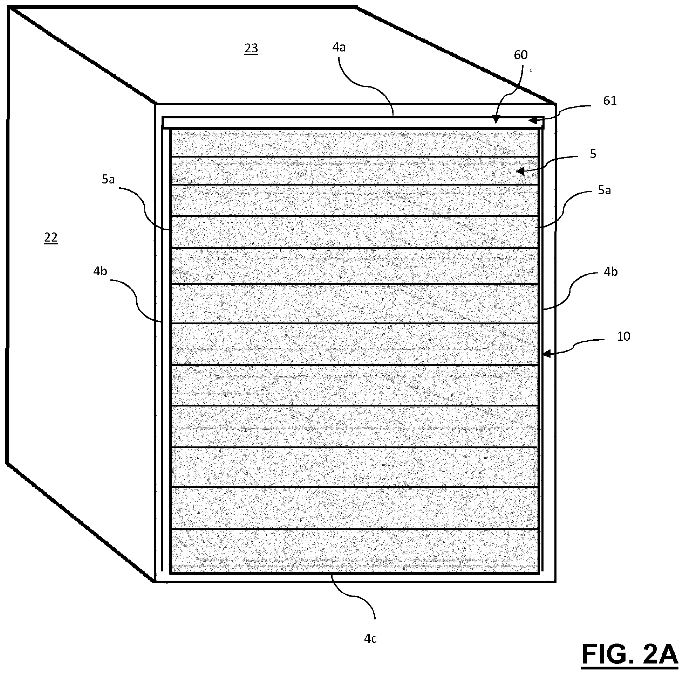

Figures 2A and 2B show two variants of a second embodiment of the invention that are rather similar to the one shown in figures 1A and 1C, but which are nonetheless different than the latter since the curtain 5 is of the pleated type ("plissé type"), or foldable on itself and not winding. Also in this case, the curtain 5 is however slidingly constrained to the box-shaped container 2 in order to lengthen or shorten to cover at least partially, or completely, the opening 4. Also in this case, the pleated curtain 5 further comprises a plurality of holes 20 for the passage of air inside the box-shaped container 2.

As shown in figures 2A and 2B, the sprouter 1 comprises means 60 for folding/stretching the pleated curtain 5. In figure 2A, these folding/stretching means comprise a single flat-base stop rod 61 on which the curtain 5 completely folds. In particular, the stop rod 61 is fixed on the front side 2a of the box-shaped container 2, at the upper edge 4a of the opening 4 of the box-shaped container 4. In figure 2B, these folding/stretching means comprise two flat-base stop rods 61 on which the curtain 5 completely folds. As will be clearer below in the last embodiment shown in figure 2B, the two rods 61 are not fixed at the upper 4a or lower 4c edge of the opening 4 of the box-shaped container 2, but slidingly in a plurality of positions.

These two stop rods 61 are arranged on the respective ends of the curtain 5.

The pleated curtain 5 is still sized so that its weight is such as to maintain it in a stable position in a plurality of different positions as it gradually lengthens/shortens. The means 60 can further comprise, in an embodiment not shown herein, a cord to lengthen or shorten the pleated curtain 5.

As in the embodiment described in figures 1A-1C, also in the second embodiment of the invention shown in figures 2A and 2B, the sprouter 1 comprises two linear guides 10 in order to guide the lengthening/shortening of the pleated curtain 5 along the side edges 5a. These two linear guides 10 are constrained integrally to the box-shaped container 2, in a Y direction substantially orthogonal to the lengthening/shortening one of the curtain 5. In particular, these two linear guides 10 are constrainably arranged on the front side 2a of the box-shaped container 2, along the respective side edge 4a of the opening 4 of the box-shaped container 2.

As mentioned above, in figure 2B, the two stop rods 61 can slide along the two guides 10 and are reversibly lockable in a plurality of positions so as to make it possible to also cover a section of the opening 4 that is between the two consecutive bored diaphragms 3, without being forced to always cover the section of the opening 4 that is between the upper 4a or lower 4b edge of the opening 4 of the box-shaped container 2 and the nearest bored diaphragm 3.

Also in the first embodiment, the rotation shaft 6 can also slide along the two guides 10 and reversibly lockable in a plurality of different positions without thereby departing from the protection scope of the present invention.

Moreover, the holes 20 of the curtain 5, whether winding or pleated, are less than 2 mm in size and, anyhow, sized so as to prevent insects from accessing the box-shaped container 2 at the section of the opening 4 covered by the curtain 5. This makes it possible to obtain a sufficient exchange of air inside the box-shaped container 2 and to simultaneously prevent insects from penetrating the boxed-shaped container 2 when the curtain is lowered to cover partially, or completely, the front opening 4. In any case, these holes 20 are spread out over the entire surface of the curtain 5, like a mosquito net, to ensure the passage of air between the inside I and the outside E of the box-shaped container 2 under any condition, even with the curtain 5 completely lowered to completely cover the front opening 4. The curtain is made of a glass fiber net, or of a plastic material such as PVC for example, or anyhow of another material with similar characteristics.

The diaphragms 3 are positioned between the box-shaped container 2, leaning on appropriate couples of transverse profiles 40 arranged cantileverly on the inner side 22a of the two side walls 22 of the box-shaped container 2.

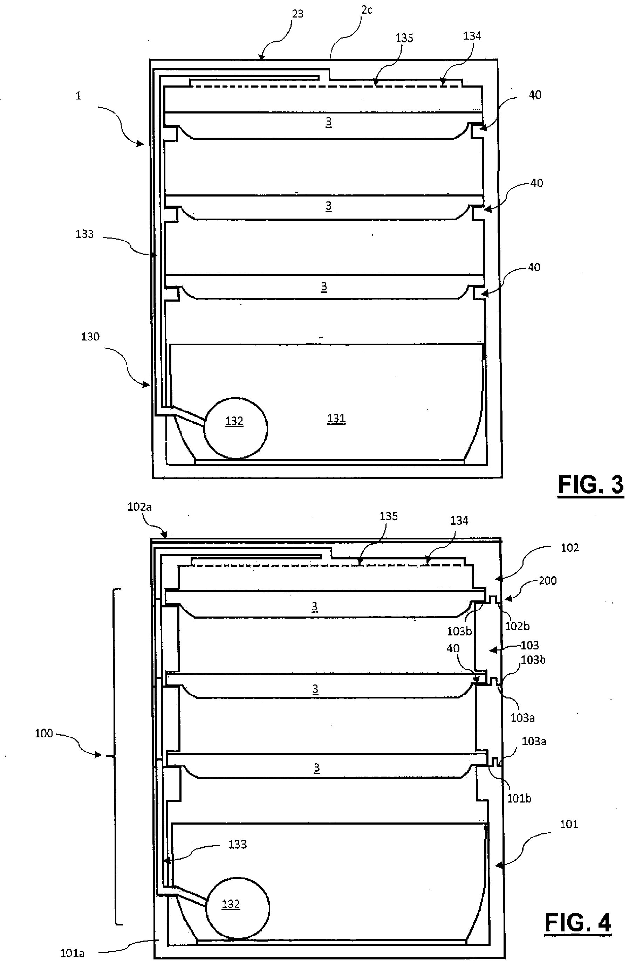

As shown in figure 3, the sprouter 1, both in the first and in the second aforesaid embodiments, further comprises irrigating means 130 that in turn comprise a vessel 131 for containing the irrigation liquid, i.e. water eventually mixed to nutritive substances, a pump 132 and a line 133 for channeling the irrigation liquid in direction of the upper wall 23 of the box-shaped container 2 by means of the pump. It should be noted that the vessel 131 is contained under the box-shaped container 2 and that the pump 132, of the immersion type, is contained within the vessel 131 of the irrigation liquid. Finally it should be specified that, in other embodiments, the pump can be outside of the sprouter without thereby departing from the protection scope of the present invention.

The channeling line 133 runs along a side wall 22 of the box-shaped container 2 and ends at the upper wall 23 of the box-shaped container 2. According to the invention, the upper wall 23 comprises a delivering plate 134 in order to deliver the irrigation liquid. This delivering plate 134, which is arranged parallel to the upper side 2c of the box-shaped container, is provided with a plurality of irrigating nozzles 135. According to a third embodiment of the invention, the box-shaped container 2 comprises a plurality of modules 100 combinable by stacking.

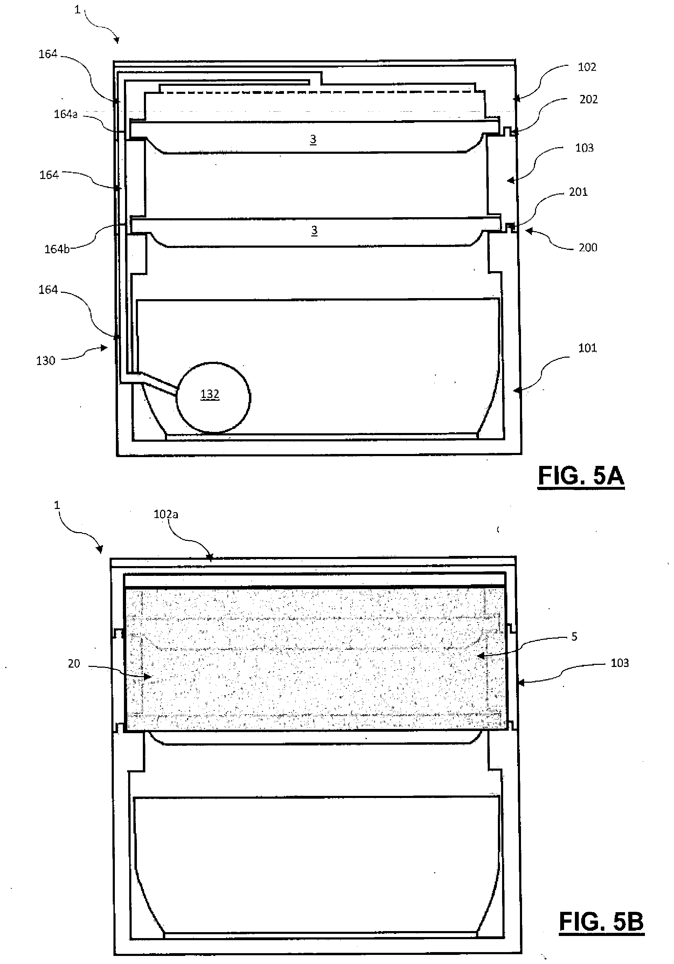

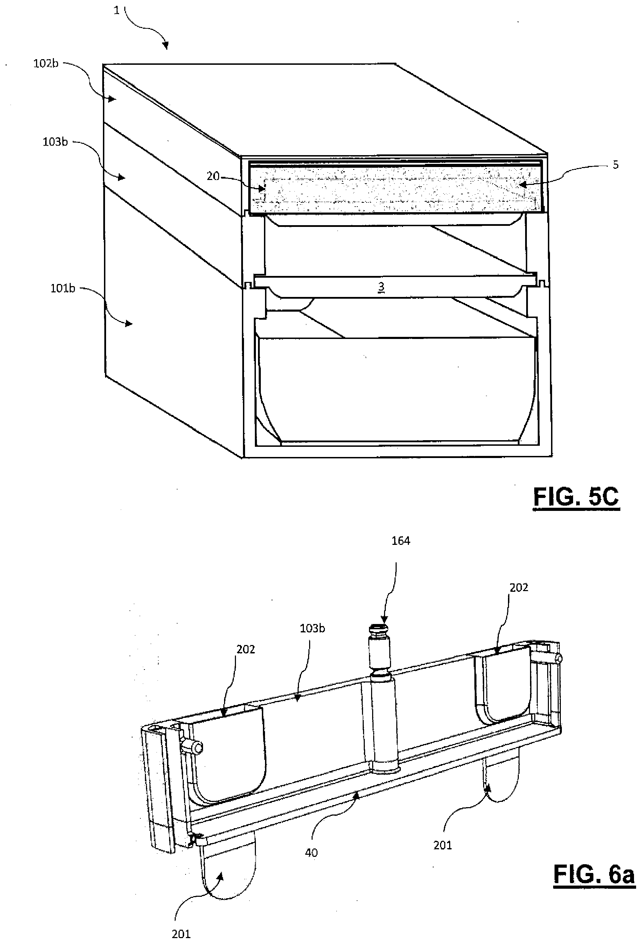

According to the embodiment shown in figure 4, the plurality of combinable modules 100 comprises a lower module 101 provided with a lower base 101a, an upper module 102 provided with an upper removable covering element 102a, and two intermediate modules 103 comprised between the upper module 102 and the lower module 101. Each intermediate module 103 and lower module 102 are further provided with a couple of transverse profiles 40 arranged inside the opening 4 in order to bear the respective diaphragm 3 of the three diaphragms 3 used in the sprouter 1 shown in figure 3. Instead, figure 5A shows a sprouter 1, wherein there is only one intermediate module 103 and two diaphragms 3. In other embodiments not shown herein, the number of intermediate modules 103 can also be greater than two, such as three or four or more for example, without thereby departing from the protection scope of the present invention.

It should be noted that in a variant of this third embodiment not shown herein, the height of the intermediate module 103 and of the lower 101 and upper 102 modules, as the respective widths and lengths, are identical without thereby departing from the protection scope of the present invention. This solution makes it possible to mold the modules 100 of the box-shaped container 4 by using a single mold.

The modules 100 of the box-shaped container can alternatively further be obtained by means of a 3D printer.

As shown in figures 4 and 5A to 5C, the sprouter 1, according to the third embodiment, further comprises means 200 for connecting, by stacking and removably, the modules 101, 102 and 103. These connecting means 200 by stacking comprise a jutting portion 201 and a corresponding recessed portion 202 couplable by shape to the jutting portion 201. In particular, the lower module 101 comprises a jutting portion 201 arranged on the upper side 101b and couplable with a recessed portion 202 arranged on the lower side 103a of the intermediate module 103 arranged above the aforesaid lower module 101. Moreover, the intermediate module 103 further comprises a jutting portion 201 arranged on its upper side 103b. The intermediate modules 103 are all identical in shape and size, therefore, the last module to be stacked, the upper module 102, comprises a recessed portion 202 arranged on its lower side 102b that couples with the jutting portion 201 arranged on the upper surface 103b of the intermediate module 103 at higher height. According to the embodiment described herein, the jutting portion 201 and the recessed portion 202 extend in vertical direction.

According to the embodiment shown in figure 5A, the sprouter 1 further comprises irrigating means 130 that in turn comprise a vessel 131 for containing the irrigation liquid, i.e. water eventually mixed to nutritive substances, a pump 132 and a line 133 for channeling the irrigation liquid in direction of the upper module 102 by means of the pump. It should be noted that the vessel 131 is contained between the lower module 101 and that the pump 132 is of the immersion type and is contained within the vessel 131 of the irrigation liquid.

According to an embodiment, the upper module 102 comprises a delivering plate 134 in order to deliver the irrigation liquid. This delivering plate 134 is provided with a plurality of irrigating nozzles 135 and is arranged at the upper wall 23 of the box-shaped container 2, at a lower level compared to the upper covering 102a so that this plate 134 can also be inspected. Both the delivering plate 134 and the plurality of nozzles 135 are also present in the first and second embodiments of the invention described above and shown in figures 1A-1C, 2A-2B and 3. Although not shown in those figures, the embodiment can however further comprise an upper covering 102a removable for the inspection of the delivering plate 134 arranged at the upper wall 23.

Moreover, the channeling line 133 comprises a plurality of ducts 164 each of which is constrained to the respective module 101, 102 and 103 of the plurality of combinable modules 100 so that the ducts 164 of the two consecutive modules, at least when stacked, are sealingly combined to one another. This way, regardless of the number of modules, it will always be possible to create a channeling line 133 that brings the irrigation liquid from the lower vessel 131 to the upper module 102 in order to deliver it to the diaphragms 3 by using the irrigating or delivering plate 134 without thereby having to also assemble the channeling line 133, since it will already be assembled once the modules 100 will be stacked correctly among one another. Finally, the ends 164a and 164b of each duct 164 of said plurality of ducts are obtained so that they can be arranged, respectively, at the jutting portion 201 and at the recessed portion 202 couplable by shape to the jutting portion 201.

It should be noted that the lengthening/shortening curtain door 5 is advantageously used in this sprouter 1 of the type made up with combinable modules 100 since, independently from the number of intermediate modules 103 used, it will always be possible to completely or partially cover the front opening 4 by winding the curtain 5 to an appropriate length according to the number of intermediate modules 103 used. It should however be noted that, although a sprouter 1 provided with a lengthening/shortening door 5 comprising a winding or pleated curtain has been described up to this point, a solution of the type described in the third embodiment, i.e. a box-shaped container 2 of the modular type but without a curtain door 5, as described below, may also be protected per se.

In practice, it would be a sprouter 1 comprising, in its essential implementation, a box-shaped container 2 and one or more transverse sprouting diaphragms 3 positionable inside said box-shaped container 2 at different heights and advantageously removable, wherein said box-shaped container 2 further comprises at least one opening 4 and a plurality of modules 100 combinable by stacking.

In particular the sprouter 1, in its most simple embodiment, comprises a box-shaped container 2 and one or more bored transverse sprouting diaphragms 3 positionable inside said box-shaped container at different heights, said box-shaped container 2 further comprising at least one opening 4 for inserting bored diaphragms and a plurality of modules 100 combinable by stacking. Always in its most simple embodiment, said plurality of combinable modules 100 comprises at least one lower module 101 provided with a lower base 101a, at least one upper module 102 provided with an upper covering element 102a, advantageously removable, and one or more intermediate modules 103 comprised between said upper module 102 and said lower module 101. Moreover, one or more modules 101, 102 and/or 103 can be provided with a couple of transverse profiles 40 arranged inside the opening 4 in order to bear the respective diaphragm 3 of the plurality of diaphragms 3 used in the sprouter 1, such as shown in figure 4 or 5A for example. In its essential embodiment, the sprouter further comprises irrigating means 130 comprising at least one vessel 131 for containing the irrigation liquid, at least one pump 132 and a line for channeling 133 the irrigation liquid to the upper module by means of the pump 132. Advantageously, the channeling line 133 comprises a plurality of ducts 164, wherein each duct is constrained to the respective module of the plurality of stackable modules 100 so that the ducts 164 of the two consecutive stackable modules, at least when stacked, are sealingly combinable to one another.

In other embodiments, the sprouter 1 will then comprise one or more of claims 2 to 15.

Moreover, this type of sprouter 1 devoid of a door 5 in its essential implementation, further comprises means 200 for connecting, by stacking and removably, the modules 101, 102 and 103. These connecting means 200 by stacking comprise a jutting portion 201 and a corresponding recessed portion 202 couplable by shape to the jutting portion 201. In particular, the lower module 101 comprises a jutting portion 201 arranged on the upper side 101b and couplable with a recessed portion 202 arranged on the lower side 103a of the intermediate module 103 arranged above the aforesaid lower module 101. Moreover, the intermediate module 103 further comprises a jutting portion 201 arranged on its upper side 103b. The intermediate modules 103 are all identical in shape and size, therefore, the last module to be stacked, the upper module 102, comprises a recessed portion 202 arranged on its lower side 102b that couples with the jutting portion 201 arranged on the upper surface 103b of the intermediate module 103 at higher height. According to the embodiment described herein, the jutting portion 201 and the recessed portion 202 extend in vertical direction.

Moreover, the sprouter 1 can further comprise irrigating means 130 that in turn comprise a vessel 131 for containing the irrigation liquid, i.e. water eventually mixed to nutritive substances, a pump 132 and a line 133 for channeling the irrigation liquid in direction of the upper module 102 by means of the pump. It should be noted that the vessel 131 is contained between the lower module 101 and that the pump 132 is of the immersion type and is contained within the vessel 131 of the irrigation liquid. Moreover, the upper module 102 comprises a delivering plate 134 in order to deliver the irrigation liquid. This delivering plate 134 is provided with a plurality of irrigating nozzles 135 and is arranged at the upper wall 23 of the box-shaped container 2, at a lower level compared to the upper covering 102a so that this plate 134 can also be inspected.

Moreover, as already mentioned above for the most simple embodiment, the channeling line 133 can comprise a plurality of ducts 164 each of which is constrained to the respective module 101, 102 and 103 of the plurality of combinable modules 100 so that the ducts 164 of the two consecutive modules, at least when stacked, are sealingly combinable to one another. This way, regardless of the number of modules used, it will always be possible to create a channeling line 133 that brings the irrigation liquid from the lower vessel 131 to the upper module 102 in order to deliver it to the diaphragms 3 by using the irrigating or delivering plate 134 without thereby having to also assemble the channeling line 133, since it will already be assembled once the modules 100 will be stacked correctly among one another. Finally, the ends 164a and 164b of each duct 164 of said plurality of ducts are obtained so that they can be arranged, respectively, at the jutting portion 201 and at the recessed portion 202 couplable by shape to the jutting portion 201.

Also in this embodiment, it should be noted that the curtain door 5, whether winding or pleated and anyhow lengthening/shortening, although not essential, is advantageously used in this sprouter 1 of the type obtained with combinable modules 100 since, independently from the number of intermediate modules 103 used, it will always be possible to completely or partially cover the front opening 4 by winding the curtain 5 of the appropriate length depending on the number of intermediate modules 103 used. Therefore, in practice, this embodiment will comprise the characteristics of the sprouter comprised in the claims 1 to 10.

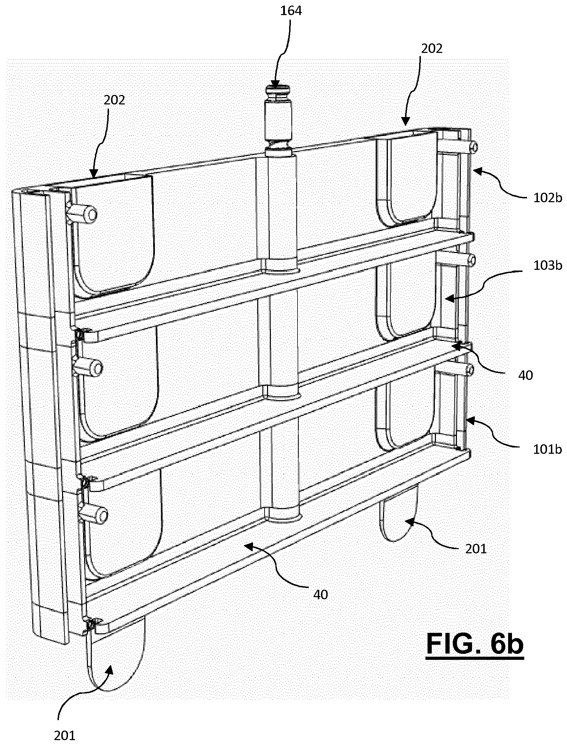

According to a particular embodiment of the invention shown in figures 6A and 6B, each module 101, 102 and 103 of the plurality of combinable modules 100 (not completely shown in the figures mentioned) comprises a respective side 101b, 102b, 103b that, in turn, comprises two jutting portions 201 and two recessed portions 202 so as to couple by stacking to the side of the module placed below and/or to the side of the module placed above. For example, as shown in figure 6B, the three modules 101, 102 and 103 (not completely shown as mentioned above, but only with reference to the respective side) of the plurality of modules 100 have their own side 101b, 102b and 103b further comprising a duct 164 of the channeling line 133. Always with reference to figure 6B, the side 103b of the intermediate module 103 is hooked, at the bottom, to the side 101b of the lower module 101 and, at the top, to the side 102b of the upper module 102. This thanks to the jutting 201 and recessed 202 portions and the duct 164 of the channeling line 133.

It should be noted that the three sides shown in figure 6B could be, in other embodiments, the three sides 103b of three intermediate modules 103. Advantageously, the sides 101b, 102b and 103b of the three modules 101, 102 and 103 are identical, as the sides parallel to and opposite (not shown in the figure) the ones shown in figure 6B, therefore, only one mold is needed to obtain most of the box-shaped container 2 of the sprouter 1.

## Claims

1. Sprouter (1) comprising a box-shaped container (2) and one or more bored transverse sprouting diaphragms (3) positionable inside said box-shaped container at different heights, said box-shaped container (2) further comprising at least one opening (4) for inserting said one or more bored diaphragms and a plurality of modules (100) combinable by stacking, said plurality of combinable modules comprising a lower module (101) provided with a lower base (101a), an upper module (102) provided with an upper covering element (102a) and one or more intermediate modules (103) comprised between said upper module and said lower module, one or more modules of said plurality of modules being provided with a couple of transverse guides (40) arranged on opposite sides to bear at least one diaphragm of said one or more diaphragms, said sprouter further comprising irrigating means (130) comprising at least one vessel (131) for containing the irrigation liquid, at least one pump (132) and at least one channeling line (133) to channel, by means of said at least one pump, said irrigation liquid to said upper module, **characterized in that** said channeling line comprises a plurality of ducts (164), each duct being constrained to the respective module of said plurality of stackable modules so that the ducts (164) of two consecutive stackable modules, at least when stacked, are sealingly combinable to one another.

2. Sprouter according to claim 1, **characterized by** comprising connecting means (200) to connect said one or more modules of said plurality of modules by stacking them removably, said connecting means comprising at least one jutting portion (201) and at least one corresponding recessed portion (202) that can be shape coupled to said jutting portion, each module of said plurality of modules comprising at least one jutting portion and/or at least one recessed portion so that to be stack coupled to a module placed below and/or a module placed above.

3. Sprouter according to claim 1 or 2, **characterized in that** said upper module (102) comprises a delivering plate (134) in order to deliver the irrigation liquid, said irrigating plate being provided with a plurality of irrigating nozzles (135) and being arranged at the upper wall of said box-shaped container.

4. Sprouter according to claim 2, **characterized in that** the ends (164a, 164b) of each duct (164) of said plurality of ducts are made to be arranged, respectively, at said at least one jutting portion (201) and said at least one recessed portion (202) that can be shape coupled to said jutting portion.

5. Sprouter according to one or more of claims 1 to 4, **characterized in that** said one or more bored diaphragms (3) have circular or rectangular shape.

6. Sprouter according to claim 2, **characterized in that** each module (101, 102, 103) of said plurality of combinable modules (100) comprises at least one side (101b, 102b, 103b) comprising at least one jutting portion (201) and/or at least one recessed portion (202) so as to couple by stacking to the side of the lower module and/or to the side of the upper module.

7. Sprouter according to claim 6, **characterized in that** said at least one side (101b, 102b, 103b) of each module (101, 102, 103) of said plurality of combinable modules (100) further comprises said at least one duct (164) of said plurality of ducts.

8. Sprouter according to claim 6 or 7, **characterized in that** the sides (101b, 102b, 103b) of each module (101, 102, 103) of said plurality of modules are identical.

9. Sprouter (1) according to one or more of claims 1 to 8, wherein said box-shaped container comprises at least one door (5) constrained to said box-shaped container and combinable to cover said opening of said box-shaped container, **characterized in that** said at least one door (5) comprises at least one curtain slidingly constrained to said box-shaped container so as to be able to lengthen, or shorten, in order to cover at least partially, or completely, said at least one opening, and **in that** said at least one curtain comprises a plurality of holes (20) so that the air can cross said box-shaped container.

10. Sprouter (1) according to claim 9, **characterized in that** said curtain can be wound around a winding axis (x) and **in that** it comprises winding means for said curtain, said winding means comprising at least one rotation shaft (6) around which said at least one curtain can be wound, said rotation shaft having a longitudinal axis coinciding with said winding axis.

11. Sprouter according to claim 10, **characterized in that** said at least one opening (4) is defined by at least one upper edge (4a) and one lower edge (4c), said at least one rotation shaft being arranged at said upper edge (4a) or said lower edge (4c).

12. Sprouter according to claim 10 or 11, **characterized in that** said curtain is sized so that its weight is such as to maintain it in a stable position in a plurality of different positions as it gradually lengthens/shortens.

13. Sprouter according to one or more of claims 9 to 12, **characterized by** comprising at least one linear guide (10) to guide the lengthening/shortening of said curtain (5), said at least one linear guide (10) being constrained to said box-shaped container in a direction substantially parallel to the lengthening/shortening direction of said curtain (5).

14. Sprouter according to at least claims 10 and 13, **characterized in that** said rotation shaft slides along said at least one guide and can be reversibly stopped in a plurality of positions.

15. Sprouter according to one or more of claims 9 to 14, **characterized in that** said holes are less than 2 mm in size.

## Patentansprüche

1. Keimapparat (1) mit einem kastenförmigen Behälter (2) und einer oder mehreren gebohrten quer verlaufenden Keimmembranen (3), die in dem kastenförmigen Behälter in verschiedenen Höhen positioniert werden können, wobei der kastenförmige Behälter (2) ferner mindestens eine Öffnung (4) zum Einsetzen der einen oder mehreren gebohrten Membranen und mehrerer durch Stapeln kombinierbarer Module (100) aufweist, wobei die mehreren kombinierbaren Module ein unteres Modul (101) mit einer unteren Basis (101a), ein oberes Modul (102) mit einem oberen Abdeckelement (102a) und ein oder mehrere Zwischenmodule (103) aufweisen, die zwischen dem oberen Modul und dem unteren Modul angeordnet sind, wobei ein oder mehrere Module der mehreren Module mit zwei gegenüberliegenden quer verlaufenden Führungen (40) versehen sind, um mindestens eine Membran der einen oder der mehreren Membranen zu tragen, wobei der Keimapparat ferner eine Spüleinrichtung (130) aufweist, die mindestens ein Gefäß (131) zum Aufnehmen der Spülflüssigkeit umfasst, mindestens eine Pumpe (132) und mindestens ein Kanalisierungsleitung (133), um mittels der mindestens einen Pumpe die Spülflüssigkeit zu dem oberen Modul zu leiten, **dadurch gekennzeichnet, dass** die Kanalisierungsleitung eine Mehrzahl von Kanälen (164) umfasst, wobei jeder Kanal an das jeweilige Modul der Mehrzahl von stapelbaren Modulen befestigt ist, so dass die Kanäle (164) von zwei aufeinanderfolgenden stapelbaren Modulen, zumindest wenn sie gestapelt sind, dichtend miteinander kombinierbar sind.

2. Keimapparat gemäß Anspruch 1, **gekennzeichnet durch** Verbindungsmittel (200), um das eine oder die mehreren Module der mehreren Module durch lösbares Stapeln miteinander zu verbinden, wobei die Verbindungsmittel mindestens einen vorstehenden Abschnitt (201) und mindestens einen entsprechenden vertieften Abschnitt umfassen (202), der mit dem vorstehenden Abschnitt formgekoppelt werden kann, wobei jedes Modul der mehreren Module mindestens einen vorstehenden Abschnitt und/oder mindestens einen vertieften Abschnitt umfasst, so dass es mit einem darunter angeordneten Modul und/oder einem darüber angeordneten Modul durch Stapeln miteinander formgekoppelt werden kann.

3. Keimapparat gemäß Anspruch 1 oder 2, **dadurch gekennzeichnet, dass** das obere Modul (102) eine Abgabeplatte (134) zum Abgeben der Spülflüssigkeit umfasst, wobei die Abgabeplatte mit einer Vielzahl von Spüldüsen (135) versehen und an der oberen Wand des kastenförmigen Behälters angeordnet sind.

4. Keimapparat gemäß Anspruch 2, **dadurch gekennzeichnet, dass** die Enden (164a, 164b) jedes Kanals (164) der Mehrzahl von Kanälen so hergestellt sind, um sie jeweils an dem mindestens einen vorstehenden Abschnitt (201) und an dem mindestens einen vertieften Abschnitt (202) anzuordnen, der mit dem vorstehenden Abschnitt formgekoppelt werden kann.

5. Keimapparat gemäß einem oder mehreren der Ansprüche 1 bis 4, **dadurch gekennzeichnet, dass** die eine oder mehreren gebohrten Membranen (3) eine kreisförmige oder rechteckige Form haben.

6. Keimapparat gemäß Anspruch 2, **dadurch gekennzeichnet, dass** jedes Modul (101, 102, 103) der mehreren kombinierbaren Module (100) mindestens eine Seite (101b, 102b, 103b) aufweist mit mindestens einem vorstehenden Abschnitt (201) und/oder mindestens einem vertieften Abschnitt (202), um es durch Stapeln an der Seite des unteren Moduls und/oder an der Seite des oberen Moduls zu koppeln.

7. Keimapparat gemäß Anspruch 6, **dadurch gekennzeichnet, dass** die mindestens eine Seite (101b, 102b, 103b) jedes Moduls (101, 102, 103) der mehreren kombinierbaren Module (100) ferner den mindestens einen Kanal (164) der Mehrzahl von Kanälen umfasst.

8. Keimapparat gemäß Anspruch 6 oder 7, **dadurch gekennzeichnet, dass** die Seiten (101b, 102b, 103b) jedes Moduls (101, 102, 103) der mehreren Module identisch sind.

9. Keimapparat (1) gemäß einem oder mehreren der Ansprüche 1 bis 8, wobei der kastenförmige Behälter mindestens eine Tür (5) aufweist, die an dem kastenförmigen Behälter befestigt ist und kombinierbar ist, um die Öffnung des kastenförmigen Behälters abzudecken, **dadurch gekennzeichnet, dass** die mindestens eine Tür (5) mindestens einen Vorhang umfasst, der gleitend an dem kastenförmigen Behälter befestigt ist, so um verlängert oder verkürzt werden zu können, um die mindestens eine Öffnung zumindest teilweise oder vollständig zu bedecken, und dass der mindestens eine Vorhang eine Vielzahl von Löcher (20) aufweist, so dass die Luft durch den kastenförmigen Behälter durchqueren kann.

10. Keimapparat (1) gemäß Anspruch 9, **dadurch gekennzeichnet, dass** der Vorhang um eine Wickelachse (x) gewickelt werden kann und dass er eine Wickeleinrichtung für den Vorhang umfasst, wobei die Wickeleinrichtung mindestens eine Drehwelle (6) umfasst, um die der mindestens eine Vorhang gewickelt werden kann, wobei die Drehwelle eine Längsachse aufweist, die mit der Wickelachse zusammenfällt.

11. Keimapparat gemäß Anspruch 10, **dadurch gekennzeichnet, dass** die mindestens eine Öffnung (4) durch mindestens eine Oberkante (4a) und eine Unterkante (4c) definiert ist, wobei die mindestens eine Drehwelle an der Oberkante (4a) oder der Unterkante (4c) angeordnet ist.

12. Keimapparat gemäß Anspruch 10 oder 11, **dadurch gekennzeichnet, dass** der Vorhang so bemessen ist, dass sein Gewicht ihn in mehreren verschiedenen Positionen in einer stabilen Position hält, wenn er sich allmählich verlängert/verkürzt.

13. Keimapparat gemäß einem oder mehreren der Ansprüche 9 bis 12, **gekennzeichnet durch** mindestens eine Linearführung (10) zum Führen der Verlängerung/Verkürzung des Vorhangs (5), wobei die mindestens eine Linearführung (10) an dem kastenförmigen Behälter in einer Richtung befestigt ist, die im Wesentlichen parallel zur Verlängerungs-/Verkürzungsrichtung des Vorhangs (5) verläuft.

14. Keimapparat gemäß mindestens den Ansprüchen 10 und 13, **dadurch gekennzeichnet, dass** die Drehwelle entlang der mindestens einen Führung gleitet und in mehreren Positionen reversibel gestoppt werden kann.

15. Keimapparat gemäß einem oder mehreren der Ansprüche 9 bis 14, **dadurch gekennzeichnet, dass** die Löcher eine Größe von weniger als 2 mm haben.

## Revendications

1. Germoir (1) comprenant un conteneur en forme de boîte (2) et une ou plusieurs membranes de germination transversales alésées (3) pouvant être positionnées à l'intérieur dudit conteneur en forme de boîte à différentes hauteurs, ledit conteneur en forme de boîte (2) comprenant en outre au moins une ouverture (4) pour insérer lesdites une ou plusieurs membranes alésées et une pluralité de modules (100) pouvant être combinés par empilement, ladite pluralité de modules pouvant être combinés comprenant un module inférieur (101) pourvu d'une base inférieure (101a), un module supérieur (102) pourvu d'un élément de recouvrement supérieur (102a) et un ou plusieurs modules intermédiaires (103) compris entre ledit module supérieur et ledit module inférieur, un ou plusieurs modules de ladite pluralité de modules étant pourvus d'une paire de guides transversaux (40) agencés sur des côtés opposés pour porter au moins une membranes desdites une ou plusieurs membranes, ledit germoir comprenant en outre des moyens d'irrigation (130) comprenant au moins un récipient (131) pour contenir le liquide d'irrigation, au moins une pompe (132) et au moins une ligne de canalisation (133) pour canaliser, au moyen de ladite au moins une pompe, ledit liquide d'irrigation vers ledit module supérieur, **caractérisé en ce que** ladite ligne de canalisation comprend une pluralité de conduits (164), chaque conduit étant contraint au module respectif de ladite pluralité de modules pouvant être empilés de sorte que les conduits (164) de deux modules pouvant être empilés consécutifs, au moins lorsqu'ils sont empilés, peuvent être combinés de manière étanche l'un avec l'autre.

2. Germoir selon la revendication 1, **caractérisé en ce qu'**il comprend des moyens de connexion (200) pour connecter lesdits un ou plusieurs modules de ladite pluralité de modules en les empilant de manière amovible, lesdits moyens de connexion comprenant au moins une partie en saillie (201) et au moins une partie évidée correspondante (202) qui peut être couplée en termes de forme à ladite partie en saillie, chaque module de ladite pluralité de modules comprenant au moins une partie en saillie et/ou au moins une partie évidée de manière à être couplé par empilement à un module placé en dessous et/ou à un module placé au-dessus.

3. Germoir selon la revendication 1 ou 2, **caractérisé en ce que** ledit module supérieur (102) comprend une plaque de distribution (134) afin de distribuer le liquide d'irrigation, ladite plaque d'irrigation étant pourvue d'une pluralité de buses d'irrigation (135) et étant agencée au niveau de la paroi supérieure dudit conteneur en forme de boîte.

4. Germoir selon la revendication 2, **caractérisé en ce que** les extrémités (164a, 164b) de chaque conduit (164) de ladite pluralité de conduits sont conçues pour être agencées, respectivement, au niveau de ladite au moins une partie en saillie (201) et de ladite au moins une partie évidée (202) qui peut être couplée en termes de forme à ladite partie en saillie.

5. Germoir selon une ou plusieurs des revendications 1 à 4, **caractérisé en ce que** lesdites une ou plusieurs membranes alésées (3) ont une forme circulaire ou rectangulaire.

6. Germoir selon la revendication 2, **caractérisé en ce que** chaque module (101, 102, 103) de ladite pluralité de modules pouvant être combinés (100) comprend au moins un côté (101b, 102b, 103b) comprenant au moins une partie en saillie (201) et/ou au moins une partie évidée (202) de manière à se coupler par empilement sur le côté du module inférieur et/ou sur le côté du module supérieur.

7. Germoir selon la revendication 6, **caractérisé en ce que** ledit au moins un côté (101b, 102b, 103b) de chaque module (101, 102, 103) de ladite pluralité de modules pouvant être combinés (100) comprend en outre ledit au moins un conduit (164) de ladite pluralité de conduits.

8. Germoir selon la revendication 6 ou 7, **caractérisé en ce que** les côtés (101b, 102b, 103b) de chaque module (101, 102, 103) de ladite pluralité de modules sont identiques.

9. Germoir (1) selon une ou plusieurs des revendications 1 à 8, dans lequel ledit conteneur en forme de boîte comprend au moins une porte (5) contrainte audit conteneur en forme de boîte et pouvant être combinée pour couvrir ladite ouverture dudit conteneur en forme de boîte, **caractérisée en ce que** ladite au moins une porte (5) comprend au moins un rideau contraint de manière coulissante audit conteneur en forme de boîte de manière à pouvoir s'allonger ou se raccourcir afin de couvrir au moins partiellement, ou complètement, ladite au moins une ouverture, et **en ce que** ledit au moins un rideau comprend une pluralité de trous (20) de sorte que l'air puisse traverser ledit conteneur en forme de boîte.

10. Germoir (1) selon la revendication 9, **caractérisé en ce que** ledit rideau peut être enroulé autour d'un axe d'enroulement (x) et **en ce qu'**il comprend des moyens d'enroulement pour ledit rideau, lesdits moyens d'enroulement comprenant au moins un arbre de rotation (6) autour duquel ledit au moins un rideau peut être enroulé, ledit arbre de rotation ayant un axe longitudinal coïncidant avec ledit axe d'enroulement.

11. Germoir selon la revendication 10, **caractérisé en ce que** ladite au moins une ouverture (4) est définie par au moins un bord supérieur (4a) et un bord inférieur (4c), ledit au moins un arbre de rotation étant disposé au niveau dudit bord supérieur (4a) ou dudit bord inférieur (4c).

12. Germoir selon la revendication 10 ou 11, **caractérisé en ce que** ledit rideau est dimensionné de façon à ce que son poids soit tel qu'il le maintienne dans une position stable dans une pluralité de positions différentes à mesure qu'il s'allonge/se raccourcit graduellement.

13. Germoir selon une ou plusieurs des revendications 9 à 12, **caractérisé en ce qu'**il comprend au moins un guide linéaire (10) pour guider l'allongement/le raccourcissement dudit rideau (5), ledit au moins un guide linéaire (10) étant contraint audit conteneur en forme de boîte dans une direction sensiblement parallèle à la direction d'allongement/de raccourcissement dudit rideau (5).

14. Germoir selon au moins les revendications 10 et 13, **caractérisé en ce que** ledit arbre de rotation coulisse le long dudit au moins un guide et peut être arrêté de manière réversible dans une pluralité de positions.

15. Germoir selon une ou plusieurs des revendications 9 à 14, **caractérisé en ce que** lesdits trous ont une taille inférieure à 2 mm.
